(19) **Europäisches Patentamt**

**European Patent Office**

**Office européen des brevets**

(11) **EP 1 714 865 A1**

(12) **EUROPEAN PATENT APPLICATION**

(43) Date of publication:
**25.10.2006 Bulletin 2006/43**

(51) Int Cl.:
*B63B 49/00* (2006.01)    *G01S 5/14* (2006.01)
*G01C 21/00* (2006.01)    *G08G 3/00* (2006.01)

(21) Application number: **06075875.2**

(22) Date of filing: **12.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.04.2005 NL 1028841**

(71) Applicant: **Alphatron Marine B.V.**
**3063 NH Rotterdam (NL)**

(72) Inventor: **Van Veen, Peter**
**3263 RH Oud-Beijerland (NL)**

(74) Representative: **Grootscholten, Johannes A.M. et al**
**Arnold & Siedsma**
**Sweelinckplein 1**
**2517 GK Den Haag (NL)**

(54) **Prognosing the course of a vessel**

(57) The invention relates to a device for prognosing at least the orientation of a vessel. The device comprises at least two course meters at different locations along the length of the vessel. The device also comprises computing means connected to the course meters for generating, on the basis of courses of each of the course meters measured by the course meters, at least one prognosed position of each of the course meters after a preselected period of time, and for determining at least one prognosed position and orientation of the vessel on the basis of prior knowledge of the positions of the course meters along the length of the vessel.

FIG. 2

EP 1 714 865 A1

**Description**

The present invention relates to making a prognosis and preferably visualizing, for instance on a radar screen, a course, .preferably an orientation, of a vessel such as a river barge, a sailing vessel, an ocean cargo ship and so on.

It is generally known in the art that a ship is kept on course on the basis of navigation by the crew of a ship or vessel. It is however usually advantageous here, particularly though not exclusively on inland waterways, to be able to predict the effect of currents, wind speeds, course changes etc., in particular as quickly as possible after such phenomena begin to have an effect.

The invention has for its object to provide a solution herefore.

The solution is thus provided according to the present invention in the form of a device according to claim 1, optionally with a preferred embodiment according to any of the dependent claims 2-6, a system according to claim 7 and a vessel according to claim 8.

By using two course meters at different locations along the length of the vessel the course of each of these course meters can be determined substantially independently of the other. Together these course meters provide signals representative of the present course of at least two locations along the length of the ship, on the basis of which a prediction can be made about a future, or prognosed position and orientation of the vessel. Use is made for this purpose of computing means which can process the analog or digital signals from the course meters. The courses of each course meter measured by the course meters are used here to make a prognosis of the position of each of the course meters after a preselected period of time. This is the same period of time for both course meters. A prognosis can thus be made of the position and the orientation of the vessel after the preselected time interval on the basis of the predicted or prognosed positions of the individual course meters and on the basis of prior knowledge of the locations of these course meters along the length of the vessel. The thus prognosed information relating to the position and the orientation of the vessel can be used in diverse ways to make it possible for the helmsman of a vessel to gain insight into the effects of influences such as course changes, current speeds, wind influences and so forth.

In a strongly recommended preferred embodiment the device can be used in combination with a screen, for instance a screen of radar equipment, for the purpose of visualizing in any case the present position and orientation of a vessel relative to the locality thereof, and then also displaying on the screen future, prognosed positions and orientations of the vessel relative to this same locality. When a helmsman thus alters the course of a vessel, he can immediately see on his radar screen the effect of changing the course. Also if the current speed changes, or the wind influence, the helmsman can immediately observe on his radar screen - or any other screen - the effect thereof on the future position and orientation of his vessel. Appropriate action can therefore already be undertaken at a very early stage after a change in course, change in current speed, change in weather influence and so on, when the prognosed position and orientation of the vessel gives cause to do so.

The computing means are preferably adapted to determine the at least one prognosed position and orientation of the vessel relative to a current orientation and position of the vessel at a moment of measurement by the course meters. Use can thus be made of current information about position and orientation and simultaneously of future prognosed information about the position and the orientation of the vessel in order to provide a reference as to what effects course changes and so on have on the prognosed position and orientation, in particular relative to a then current position and orientation.

In a strongly recommended preferred embodiment the course meters can comprise locating means such as a GPS receiver. A GPS receiver is able to determine a momentary position or location, and as such a location shortly prior thereto must be memorized, for instance in a memory, in order to enable a course to be deduced from the information from a GPS receiver. The computing means can once again play a part here if they are adapted to compare the at least one previous position of one of the locating means at a time and a current position of the same locating means, in order to obtain therefrom the current course of the locating means in question.

In a preferred embodiment use can also be made of a third course meter. The third course meter can be a backup for at least one of the first two course meters, for instance in the case one of these first two course meters fails. A third course meter can also play a part as central course meter, midships of the vessel, and preferably also between the two first course meters, for the purpose of transmitting to the computing means a central course of the midships part of the vessel. An additional reference is therefore again provided, relative to which the courses determined with the course meters can be plotted in relation to a central course of the midships part. Alternatively, use can also be made of the course of the bridge of the ship, or another important reference point at random in respect of navigating of the vessel.

Account is preferably taken by the computing means of the locations of the course meters along the length of the vessel in order, on the basis of the distance therebetween, to perform a check on the computed courses of each of the course meters. This is because this distance between the locations of the course meters cannot vary when the course meters are arranged fixedly to the vessel at the pre-known locations along the length thereof. The limitation that this distance cannot vary provides a check in respect of the prognosed positions of the course meters.

Finally, the present invention also relates to an embodiment wherein the computing means are adapted, on the basis of the pre-known locations of the course meters along the length of the vessel and of the prognosed locations of the course meters, to perform a computation for the prognosed positions of the bow and the stern, particularly when the first two course meters are not arranged respectively on the bow and the stern but at some distance therefrom. In preference however, the first two course meters are placed close to the bow and the stern of the vessel in order to save computing capacity and memory capacity, even though it is quite simple for a skilled person to take this into account.

As already noted above, the present invention also relates to a system and a vessel, wherein the system can comprise a device also having radar equipment with a screen. The screen can serve to visualize the locality of the vessel within a range around the vessel. A coupling can then be arranged between the device and the radar equipment for visualizing on the screen the one prognosed position and orientation of the vessel, so that in the field of view of the range around the vessel projected on the radar screen the prognosed position and orientation of the vessel can also be displayed. It is thus possible to display rapidly and clearly the manner in which the position and orientation, and therefore the course of the ship, are influenced by changes in course, currents and wind influences. A vessel can be equipped with a device according to the present invention, and as such therefore also be a vessel according to the present invention, wherein the data obtained with the device can be made known in any manner, with no limitation, to the helmsman, although this takes place preferably, though not exclusively, by means of a system with a radar screen.

The invention will be further elucidated hereinbelow on the basis of the description of several figures of an embodiment of the present invention, in which:

Fig. 1 shows a radar image in a system according to the present invention;
Fig. 2 is a schematic representation of the input parameters associated with the image shown in fig. 1;
Fig. 3 shows a table for obtaining the image shown in fig. 1 on the basis of the parameters shown in fig. 2;
Fig. 4A, 4B and 4C show a succession of radar images through time as according to fig. 1;
Fig. 5 shows a radar image differing from fig. 1 in a system according to the present invention; and
Fig. 6 shows yet another radar image.

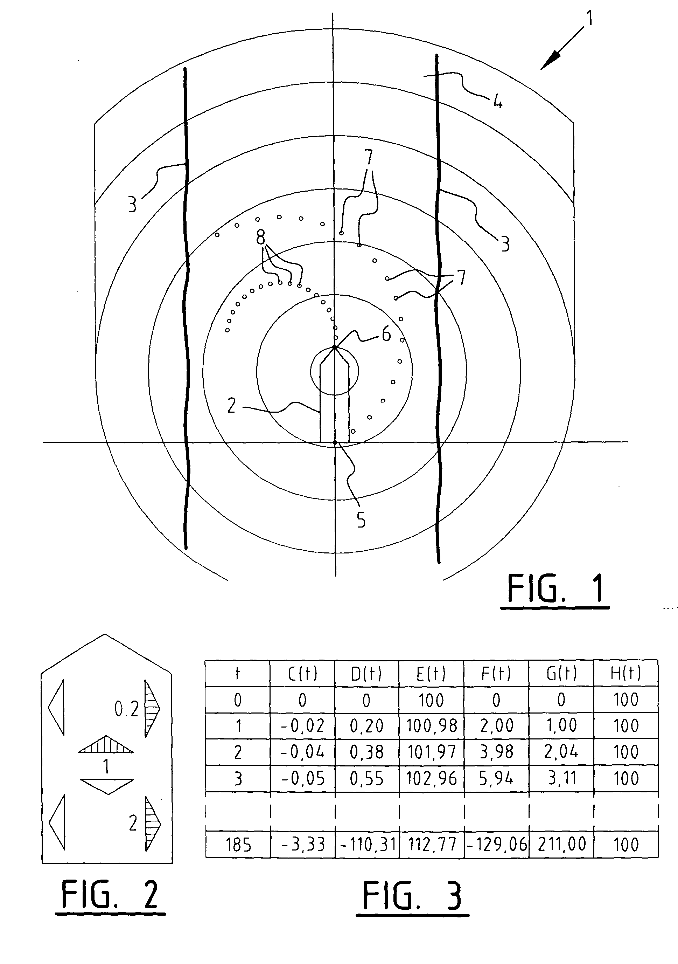

Fig. 1, together with fig. 2 and 3, shows a radar image 1. This shows a ship 2 in the locality thereof. Banks 3 of a waterway 4 in which ship 2 is navigating are thus shown.

Ship 2 comprises a stern 5 and a bow 6. Placed on or at stern 5 and bow 6 are course meters which can take the form of locating means, such as GPS receivers. GPS receivers can perform locating operations which can be related to recent previous locating operations for the purpose of determining the course of stern 5 and bow 6 of ship 2 at any moment. From the determined course a prognosis can then be made of the anticipated positions of stern 5 and bow 6.

In radar image 1 in a system according to the present invention the prognosed locations of stern 5 and of bow 6 are plotted at discrete moments in the future in the form of dots 7 for stern 5 and dots 8 for bow 6. It is noted that using an interpolation process these dots 7, 8 can be displayed in radar image 1 in the form of continuous smooth lines.

The dots 7, 8 for the respective prognosed positions of stern 5 and bow 6 correspond to the expected positions of stern 5 and bow 6 at discrete moments in time, i.e. in the future, and hence is shown here a set of prognosed positions of stern 5 and bow 6 on the basis of momentary courses of stern 5 and bow 6 such as they are at the moment when radar image 1 is formed. In other words, the prognosed future positions 7, 8 of stern 5 and bow 6 are not fixed, and if changes occur in the current, wind influence or a course changed with the helm of vessel 2, these prognosed positions 7, 8 of stern 5 and bow 6 will also change.

Fig. 2 shows the momentary courses of stern 5 and of bow 6. It is noted that a third parameter is also shown in fig. 2, and that is the midships course, which can be determined with a separate, additional course meter or locating means (GPS receiver), or more preferably is computed or obtained from the courses of the course meters at bow 6 and stern 5. On the basis of the three parameters shown in fig. 2 the future positions of stern 5 and bow 6 can be computed, and in the embodiment shown here this takes place in a table as shown in fig. 3. In the computations resulting in the values shown in fig. 3 account is herein taken of the parameters in fig. 2 provided by the course meters or locating means to computing means which then serve to compute the values in the table shown in fig. 3.

The column furthest to the left in the table in fig. 3 relates to a progression in time. The prognosed positions of stern 5 and of bow 6 computed in the table extend 185 seconds into the future.

Three parameters are shown in fig. 2, i.e. displacement of bow 6 in the X-direction, below that displacement of the vessel in the Y-direction, and below that displacement of the stern in the X-direction. Two values are computed herefrom, i.e. the displacement of bow 6 in the Y-direction and the rotation of vessel 2, on the basis of the parameters shown in fig. 2. The displacement of bow 6 in X-direction is designated here as K, displacement of vessel 2 in Y-direction is designated as L, and displacement of stern 5 in X-direction as M. The length of the ship, which is designated N, can also be taken into account here.

The displacement of the bow in Y-direction A is computed as follows:

$$A = L-N+(N^2-(K-M)^2)^0.5 \qquad (1)$$

The rotation of the ship in degrees B can hereby be computed as:

$$B = ATAN((K-M)/(A+N-L)) \qquad (2)$$

It is noted that the rotation B of the ship is per second, and that (taking rounding-off errors into account) the progressive rotation of the ship is plotted in the second column of the table of fig. 3 on the basis of the following formula:

$$C[t] = C[t-1] + B \qquad (3)$$

The X-coordinate D and Y-coordinate E of bow 6 of ship 2 can then be determined iteratively at a random moment t on the basis of the following formulae:

$$D[t] = D[t-1] + K*COS(C[t-1]) + A*SIN(C[t-1]) \qquad (4)$$

$$E[t] = E[t-1] + A*COS(C[t-1]) - K*SIN(C[t-1]) \qquad (5)$$

The X-coordinate F and the Y-coordinate G of stern 5 of ship 2 can also be determined iteratively at a random moment t on the basis of the following formulae:

$$F[t] = F[t-1] + M*COS(C[t-1]) + L*SIN(C[t-1]) \qquad (6)$$

$$G[t] = G[t-1] + L*COS(C[t-1]) - M*SIN(C[t-1]) \qquad (7)$$

It is then further possible to carry out a check, that the computations and prognoses have produced a correct result, by means of the following formula for computing the distance between the course meters or locating means (GPS receivers) at stern 5 and bow 6:

$$H[t] = ((D[t]-F[t])^2+(E[t]-G[t])^2)^0.5 \qquad (8)$$

This value of H[t] is given in the column furthest to the right of the table in fig. 3 and must at all times correspond to the length of the distance between the locating means, which is pre-known. If there is a difference there is an error, and a user of the system can be informed of this.

It will be apparent that, if a value K, L or M changes in the parameters of fig. 2, the value of the rotation of ship B is thereby also varied, and that on the basis thereof all values C in the table also undergo a change. Such a parameter change therefore also has direct influence on the X-coordinate of the bow D, the Y-coordinate of the bow E, the X-coordinate of the stern F and the Y-coordinate of the stern G, which will be reflected in the values computed in the table of fig. 3.

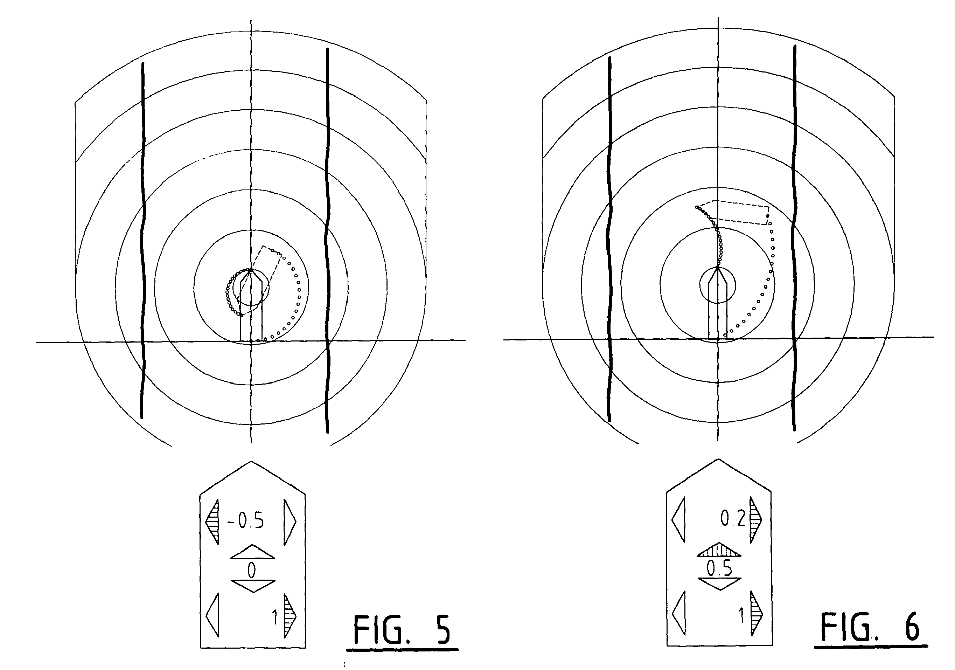

A totally different route can thus be obtained when different initial values of parameters K, L and M can be inputted with the locating means (GPS receivers) at stern 5 and bow 6 of the ship. Such different routes are for instance shown in fig. 5 and 6, although without a table such as that of fig. 3, but with an indication of parameters K, L and M corresponding with fig. 2.

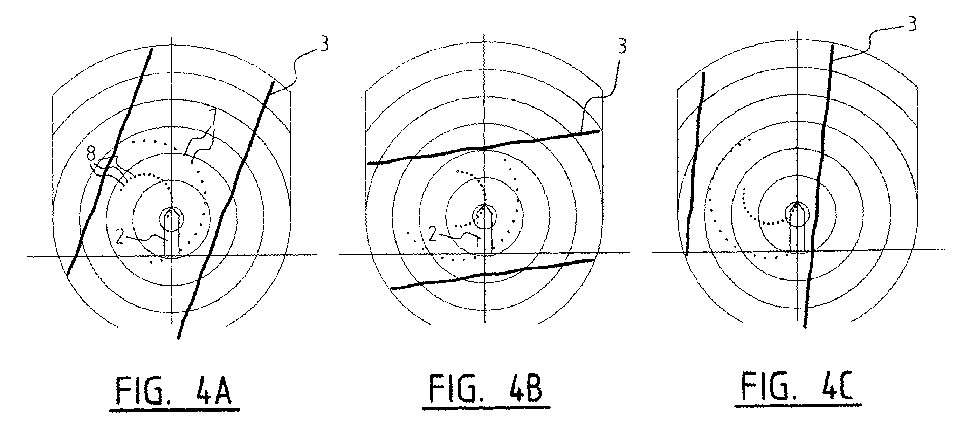

Fig. 4A, 4B and 4C otherwise also show the manner in which radar image 1 of fig. 1 changes through time, wherein the same sets of dots 7, 8 are shown as in fig. 1. It will be apparent that the display of the locality changes and that ship 2 is in each case central in the display on the radar screen, and that the ship here follows a route as also shown in fig. 1, provided parameters K, L and M do not change. It is further noted, perhaps unnecessarily, that in the views of fig. 4A, 4B and 4C there are also dots 7, 8 corresponding to past positions of stern 5 and bow 6 relative to the moment at which the images of fig. 4A, 4B and 4C are generated, although this is done for the sake of clarity and to show the manner in which the images can change through time without affecting the prognosed route of ship 2 to the extent that parameters K, L and M do not vary.

It is noted that the course meters or locating means (GPS receivers) at stern 5 and bow 6 may also be situated at a distance from stern 5 and bow 6. It is then quite simple to take this into account in plotting the courses of stern 5 and bow 6 in radar image 1 of e.g. fig. 1. This is considered simple because, if the orientation of ship 2 is known at any moment on the basis of the prognosed positions of the course meters, the positions of stern 5 and bow 6 can be readily computed on the basis of the then known orientation of the ship and the distance of the course meters relative to the associated stern 5 and bow 6.

It is noted that after examination of the foregoing description of an embodiment of the present invention many alternatives and additional embodiments will occur to the skilled person, which will not fall within the scope of protection according to the appended claims only if such embodiments contradict the definitions and/or the essence of spirit thereof thus given in the claims. It is thus possible for even more than two or three course meters to be applied, and visualizing means other than a radar screen can be used, even though integrated implementation of the present invention in a radar device with screen is however highly recommended.

**Claims**

1.  Device for prognosing at least the orientation of a vessel, comprising:

    - at least two course meters at different locations along the length of the vessel;
    - computing means connected to the course meters for generating, on the basis of courses of each of the course meters measured by the course meters, at least one prognosed position of each of the course meters after a preselected period of time, and for determining at least one prognosed position and orientation of the vessel on the basis of prior knowledge of the positions of the course meters along the length of the vessel.

2.  Device as claimed in claim 1, wherein the computing means are adapted to determine the at least one prognosed position and orientation of the vessel relative to a current orientation and position of the vessel at a moment of measurement by the course meters.

3.  Device as claimed in claim 1 or 2, wherein the course meters comprise locating means such as GPS receivers, further comprising at least one memory for memorizing at least one previous position of each of the locating means, and wherein the computing means are adapted to compare the at least one previous position of one of the locating means at a time and a current position of the same locating means, in order to obtain therefrom the current course of the locating means in question.

4.  Device as claimed in claim 1, 2 or 3, further comprising at least one third course meter, wherein the third course meter is one of the group comprising: a backup for at least one of the first two course meters; and an additional central course meter positioned midships of the vessel for the purpose of transmitting to the computing means a central course of the midships part of the vessel, and so on.

5.  Device as claimed in at least one of the foregoing claims, wherein the computing means are adapted, on the basis of the pre-known locations of the course meters along the length of the vessel, and thus the distance therebetween, to perform a check on the reliability of the at least one prognosed position of each of the course meters relative to each other.

6. Device as claimed in at least one of the foregoing claims, wherein the computing means are adapted to generate prognosed positions of the bow and the stern on the basis of the pre-known locations of the course meters along the length of the vessel and of the prognosed locations of the course meters.

7. System, comprising: a device as claimed in at least one of the foregoing claims 1-6; and radar equipment with a screen for visualizing the locality of the vessel within a range around the vessel, further comprising a coupling between the device and the radar equipment for visualizing on the screen of the radar equipment the at least one prognosed position and orientation of the vessel.

8. Vessel, comprising a floating body, such as a hull, and an active drive such as a motor, or passive drive such as a sail, and a device as claimed in at least one of the foregoing claims 1-6 or a system as claimed in claim 7.

FIG. 1

FIG. 2

| t | C(t) | D(t) | E(t) | F(t) | G(t) | H(t) |
|---|---|---|---|---|---|---|
| 0 | 0 | 0 | 100 | 0 | 0 | 100 |
| 1 | -0,02 | 0,20 | 100,98 | 2,00 | 1,00 | 100 |
| 2 | -0,04 | 0,38 | 101,97 | 3,98 | 2,04 | 100 |
| 3 | -0,05 | 0,55 | 102,96 | 5,94 | 3,11 | 100 |
| ┆ | ┆ | ┆ | ┆ | ┆ | ┆ | ┆ |
| 185 | -3,33 | -110,31 | 112,77 | -129,06 | 211,00 | 100 |

FIG. 3

FIG. 4A    FIG. 4B    FIG. 4C

EP 1 714 865 A1

FIG. 6

FIG. 5

**European Patent Office**

**EUROPEAN SEARCH REPORT**

Application Number

EP 06 07 5875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 916 284 A (ISHIHARA ET AL) 29 June 1999 (1999-06-29) * column 4, line 58 - column 10, line 54; figures 1-6 * ----- | 1-8 | INV. B63B49/00 G01S5/14 G01C21/00 G08G3/00 |

|  |  |  | TECHNICAL FIELDS SEARCHED (IPC) |
|---|---|---|---|
|  |  |  | B63B G01S G01C |

The present search report has been drawn up for all claims

| Place of search | Date of completion of the search | Examiner |
|---|---|---|
| The Hague | 14 August 2006 | DE SENA HERNANDORENA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 714 865 A1**

## ANNEX TO THE EUROPEAN SEARCH REPORT
## ON EUROPEAN PATENT APPLICATION NO.

EP 06 07 5875

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2006

| Patent document cited in search report | | Publication date | Patent family member(s) | Publication date |
|---|---|---|---|---|
| US 5916284 | A | 29-06-1999 | NONE | |

For more details about this annex : see Official Journal of the European Patent Office, No. 12/82